# EUROPÄISCHE PATENTSCHRIFT

(11) **EP 2 607 502 B1**
(45) Veröffentlichungstag und Bekanntmachung des Hinweises auf die Patenterteilung: **13.12.2017**
(21) Anmeldenummer: 11194767.7
(22) Anmeldetag: 21.12.2011
(51) Int. Cl.: C21C 7/00, C21C 7/076, B22D 1/00, B22D 11/111, B22D 41/00

(54) **Verfahren zur Isolierung einer in einem Gefäß befindlichen Stahlschmelze**
Method for insulating a steel melt in a container
Procédé d'isolation d'un acier en fusion se trouvant dans un récipient

(43) Veröffentlichungstag der Anmeldung: 26.06.2013
(73) Patentinhaber: Weerulin GmbH, 45472 Mülheim (DE)
(72) Erfinder: Fechner, Robert, 44791 Bochum (DE)
(74) Vertreter: Dr. Stark & Partner Patentanwälte mbB

(56) Entgegenhaltungen:
- WO-A1-2004/054742
- WO-A1-2011/071152
- US-A- 4 490 173

## Beschreibung

Die Erfindung betrifft ein Verfahren zur, insbesondere stofflichen und/oder thermischen, Isolierung einer in einem Gefäß, z. B. einem Verteiler, befindlichen Stahlschmelze.

Aus der Praxis sind Verfahren bekannt, bei denen die in einem Gefäß für den späteren Strangguss befindliche Stahlschmelze sowohl mit einer ca. 25 mm starken Schicht aus Calciumaluminat als auch mit einer darüber vorgesehenen weiteren Schicht aus Reisasche abgedeckt ist. Dabei dient die Schicht aus Reisasche einer thermischen Isolation, um das Auskühlen des Calciumaluminats zu reduzieren und damit einer Krustenbildung entgegenzuwirken.

Nachteilig hierbei ist, dass solche Krusten aufreißen können. Da die zur Vermeidung dieses Effekt vorgesehene Reisasche stark Kieselsäurehaltig ist, kann bei Verwendung von Reisasche Kieselsäure in die Schlacke übergehen, so dass zusätzlicher Sauerstoff zur Stahlschmelze gelangen kann, was aus metallurgischer Sicht unerwünscht ist. US4490173, WO2011071152 sowie WO2004/054742 repräsentieren relevanter Stand der Technik angesichts dieses Problematik. Aufgabe der Erfindung ist es, die vorgenannten Nachteile zu vermeiden und ein Verfahren anzugeben, mit dem eine nachteilige metallurgische Beeinflussung der Stahlschmelze durch die auf ihr vorgesehene Schicht zur Isolierung vermieden oder aber zumindest reduziert wird.

Diese Aufgabe wird dadurch gelöst, dass auf die Stahlschmelze lediglich eine einzige Schicht von ca. 8 - 20 mm aus aufgeschmolzenem Calciumaluminat aufgebracht wird. Hierdurch ist die Schichtdicke so gering, dass bei üblichen Temperaturen von Stahlschmelzen keine Krustenbildung eintritt. Zudem werden metallurgische Auswirkungen durch eventuelle weitere Schichtmaterialien vermieden.

Dabei wird die Oberfläche der auf der Stahlschmelze aufschwimmenden Schicht Calciumaluminats in einem Abstand von wenigstens 200 mm mit einem Stahldeckel, dessen der Stahlschmelze zugewandte Seite mit einem keramischen Feuerfest-Material beschichtet ist, zumindest zu wenigstens 60 - 80 % der Fläche abgedeckt. Hierdurch wird ein Wärmeverlust oberhalb der Calciumaluminatschicht verringert, wodurch das Temperaturgefälle innerhalb der Calciumaluminatschicht reduziert wird und die Gefahr von Verkrustungen weiter verringert wird.

Zudem wird die Oberfläche der auf der Stahlschmelze aufschwimmenden Schicht Calciumaluminats durch den Stahldeckel zumindest zu wenigstens 60 - 80 % der Fläche abgedeckt. Hierdurch bleiben Bereiche frei, die zum Aufbringen weiteren Materials verwendet werden können. Auch kann der Deckel so angeordnet werden, dass die freibleibenden Bereiche dort vorgesehen sind, wo Verteilerstopfen des Verteilers angeordnet sind.

Erfindungsgemäß wird die Schicht aufgeschmolzenen Calciumaluminats dadurch erzielt, dass ein Gemenge mit separaten Calciumoxid-Bestandteilen einerseits und Aluminiumoxid-Bestandteilen andererseits aufgebracht wird und anschließend aufschmilzt. Somit ist eine Vorbehandlung durch Zusammenschmelzen und Erstarrenlassen des Calciumaluminats zu Calciumaluminat-Bestandteilen nicht erforderlich.

Die Calciumoxid-Bestandteile sind dabei ausschließlich als CaO einerseits und die Aluminiumoxid-Bestandteile ausschließlich als Al₂O₃ ausgebildet. Das Verhältnis ist von 1 zu 5 bis zu 5 zu 1. Es erfolgt eine exotherme Reaktion zu Calciumaluminat.

Vorzugsweise kann die Schicht Calciumaluminat eine Schichtdicke von 10 - 15 mm aufweisen.

Die Korngrößen der Calciumoxid-Bestandteile und der Aluminiumoxid-Bestandteile können jeweils zwischen 0 und 6 mm liegen. Durch die geringe Korngröße und die exotherme Reaktion erfolgt eine schnelle Bildung einer homogenen aufgeschmolzenen Schicht.

Auch kann der Deckel so angeordnet werden, dass die freibleibenden Bereiche dort vorgesehen sind, wo Verteilerstopfen des Verteilers angeordnet sind.

Auch kann der Deckel mit einer Aussparung für das Schattenrohr der Pfanne, aus der die Stahlschmelze in den Verteiler geleitet wird, versehen sein. Die Aussparung kann insbesondere in Längs- und/oder Quererstreckung des Deckels gesehen mittig in dem Deckel angeordnet sein.

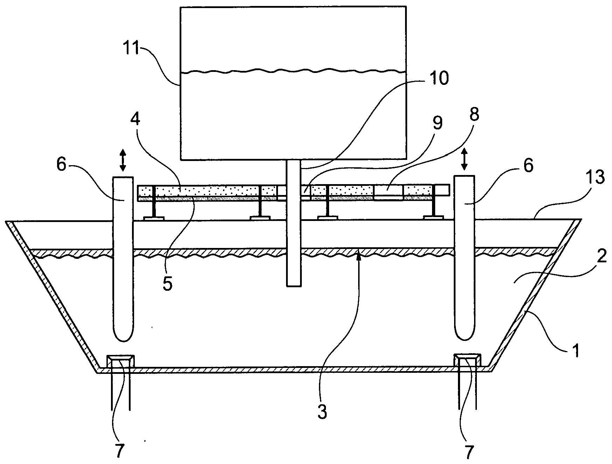

Im Folgenden wird ein in der Zeichnung dargestelltes Ausführungsbeispiel der Erfindung erläutert. Die einzige Figur zeigt einen Verteiler 1 mit einer darin befindlichen Stahlschmelze 2.

Auf der Stahlschmelze 2 ist lediglich eine einzige Schicht von ca. 8 - 20 mm aus aufgeschmolzenem Calciumaluminat 3 aufgebracht. Dabei ist die Schichtdicke so gering, dass bei üblichen Temperaturen von Stahlschmelzen 2 keine Krustenbildung eintritt.

Oberhalb der Oberfläche der auf der Stahlschmelze 2 aufschwimmenden Schicht Calciumaluminats 3 ist in einem Abstand von wenigstens 200 mm bis 400 mm ein Stahldeckel 4 vorgesehen, dessen der Stahlschmelze 2 zugewandte Seite mit einer Schicht keramischen Feuerfest-Materials 5 versehen ist. Der Stahldeckel 4 deckt dabei zumindest 60 - 80 % der Fläche der Schicht Calciumaluminats 3 ab.

Dabei bleiben seitlich Bereiche frei, in denen Stopfen 6 für Ausläufe 7 in dem Verteiler 1 angeordnet und in die Stahlschmelze 2 hineinreichend vorgesehen sind. In dem Stahldeckel 4 ist darüber hinaus eine Öffnung 8 vorgesehen, die zum Aufbringen weiteren Materials verwendet werden kann.

Darüber hinaus ist der Stahldeckel 4 mit einer Aussparung 9 für ein Schattenrohr 10, durch welches die Stahlschmelze 2 aus einer über dem Verteiler 1 befindlichen Pfanne 11, in den Verteiler 1 geleitet wird, versehen.

Dabei kann der Stahldeckel 4 wie in der Zeichnung dargestellt mittels Füßen 12 oder dergleichen auf dem Rand 13 des Verteilers 1 mit einem geringen Abstand von ca. 50 bis 150 mm oberhalb des Rands 13 angeordnet sein. Alternativ kann der Stahldeckel 4 auch direkt auf dem Rand 13 des Verteilers 1 aufliegen.

## Patentansprüche

1. Verfahren zur stofflichen und thermischen Isolierung einer in einem Gefäß befindlichen Stahlschmelze (2), **dadurch gekennzeichnet, dass** auf der Stahlschmelze (2) lediglich eine einzige Schicht von 8 - 20 mm aus aufgeschmolzenem Calciumaluminat (3) verwendet wird, wobei die Oberfläche der auf der Stahlschmelze (2) aufschwimmenden Schicht Calciumaluminats (3) in einem Abstand von wenigstens 200 mm mit einem Stahldeckel (4), dessen der Stahlschmelze (2) zugewandte Seite mit einem keramischen Feuerfest-Material (5) beschichtet ist, zumindest zu wenigstens 60 - 80 % der Fläche abgedeckt wird, wobei das Gefäß ein Verteiler (1) ist und wobei die Schicht Calciumaluminat (3) dadurch aufgebracht wird, dass ein Gemenge mit separaten Calciumoxid-Bestandteilen einerseits und Aluminiumoxid-Bestandteilen andererseits aufgebracht wird und anschließend aufschmilzt, wobei die Calciumoxid-Bestandteile ausschließlich als CaO und die Aluminiumoxid-Bestandteilen ausschließlich als Al₂O₃ ausgebildet sind und das Verhältnis von 1 zu 5 bis zu 5 zu 1 ist und eine exotherme Reaktion zu Calciumaluminat erfolgt.

2. Verfahren nach dem vorhergehenden Anspruch, **dadurch gekennzeichnet, dass** die Schicht Calciumaluminat (3) eine Schichtdicke von 10 - 15 mm aufweist.

## Claims

1. Method for material and thermal insulating of a molten steel (2) located in a container, **characterised in that** only one single layer of 8-20 mm of molten calcium aluminate (3) is used on the molten steel (2), wherein the surface of the layer of calcium aluminate (3) floating on the molten steel (2) is covered by a steel cover (4) at a distance interval of at least 200 mm, of which the side facing the molten steel (2) is coated with a ceramic refractory material (5), said cover covering at least 60-80 % of the surface, whereby the container is a distributor (1), and wherein the layer of calcium aluminate (3) is applied as a quantity of separate calcium oxide constituents on the one hand and aluminium oxide constituents on the other hand and then melted, wherein the calcium oxide constituents are formed exclusively as CaO and the aluminium oxide are formed exclusively as Al₂O₃ and the ratio is 1 to 5 to 5 to 1, and an exothermic reaction to the calcium aluminate takes place.

2. Method according to the preceding claim, **characterised in that** the layer of calcium aluminate (3) exhibits a layer thickness of 10-15 mm.

## Revendications

1. Procédé d'isolations matérielle et thermique d'une masse (2) d'acier en fusion située dans un récipient, **caractérisé par** l'utilisation, sur la masse (2) d'acier en fusion, d'une unique couche d'aluminate de calcium (3) en fusion, de 8-20 mm, sachant que la surface de ladite couche d'aluminate de calcium (3) en suspension sur la masse (2) d'acier en fusion est recouverte, à une distance d'au moins 200 mm, par une coiffe (4) en acier dont la face, tournée vers ladite masse (2) d'acier en fusion, est revêtue d'un matériau céramique réfractaire (5) au moins à raison d'au moins 60-80 % de la superficie, le récipient étant un répartiteur (1), et ladite couche d'aluminate de calcium (3) étant déposée par déversement et fusion consécutive d'un mélange renfermant, d'une part, des composants distincts d'oxyde de calcium et, d'autre part, des composants d'oxyde d'aluminium, sachant que lesdits composants d'oxyde de calcium se présentent exclusivement comme du CaO, et que lesdits composants d'oxyde d'aluminium se présentent exclusivement comme de l'Al₂O₃ ; que le rapport est de 1 à 5 et atteint jusqu'à 5 à 1 ; et qu'il s'opère une réaction exothermique donnant de l'aluminate de calcium.

2. Procédé selon la revendication précédente, **caractérisé par le fait que** la couche d'aluminate de calcium (3) présente une épaisseur de 10-15 mm.
